# EUROPEAN PATENT APPLICATION

(11) **EP 4 683 027 A1**
(43) Date of publication of application: **21.01.2026**
(21) Application number: 24852191.6
(22) Date of filing: 31.07.2024
(51) Int. Cl.: H01M 10/0583, H01M 10/42, H01M 10/052, H01M 10/0562, H01M 10/04, H01M 50/466, H01M 50/46

(54) **ALL-SOLID-STATE BATTERY**

(30) Priority: 04.08.2023 KR 20230102266
(71) Applicant: LG Energy Solution, Ltd., Seoul 07335 (KR)
(72) Inventor: Choi, Seong Won, Daejeon 34122 (KR); Kim, Yeeun, Daejeon 34122 (KR); Kim, Ji Young, Daejeon 34122 (KR); Lee, Daejin, Daejeon 34122 (KR)
(74) Representative: Goddar, Heinz J.
(86) International application number: PCT/KR2024/011223
(87) International publication number: WO 2025/033837

(57) **Abstract**

The present invention provides an all-solid-state battery comprising an electrode assembly comprising an electrode laminate comprising a positive electrode, an electrolyte film, and a negative electrode; and a pair of protective layers positioned on each of the sides of the positive electrode and the negative electrode; and a separator wrapped around the electrode assembly in a zigzag manner, such that the electrode assembly is positioned in a folded portion.

## Description

### [Technical Field]

This application claims the benefit of priority to Korean Patent Application No. 10-2023-0102266, filed August 4, 2023, the disclosures of which are incorporated herein by reference in their entirety.

The present invention relates to an all-solid-state battery. More specifically, the present invention relates to an all-solid-state battery having a structure in which a protective layer is further disposed on the outside of an electrode laminate contained within the all-solid-state battery to prevent a crack of the electrolyte layer due to tension of the separator.

### [Related Art]

With the explosion of technology development and demand for mobile devices and automobiles, more research is being conducted on secondary batteries with high energy density, discharge voltage, and good output stability. Examples of such secondary batteries may include lithium-based secondary batteries such as lithium-sulfur batteries, lithium-ion batteries, and lithium-ion polymer batteries. In addition, such secondary batteries can be categorized into cylindrical, angular, and pouch-type batteries depending on their shape, and among them, interest and demand for pouch-type batteries are gradually increasing. Pouch-type batteries can be stacked at high density and have a high energy density per weight, and they are also inexpensive and easy to transform. Thus, pouch-type batteries can be fabricated in shapes and sizes that are applicable to a variety of mobile devices and automobiles.

These pouch-type batteries typically have one or more unit cells stacked together, including a positive electrode, a negative electrode, and a separator interposed between them (i.e., an electrode assembly or stack cell), and these electrode assemblies can be housed in a cell case and then injected with electrolyte, or they can be manufactured with solid electrolyte within the electrode assembly from the start (i.e., all-solid-state batteries).

Among them, all-solid-state batteries are superior to other types of secondary batteries in terms of safety, and are gaining traction, especially in electric vehicles and mobile devices. In other words, an all-solid-state battery is a battery that replaces the electrolyte used in a conventional lithium secondary battery from a liquid to a solid, and accordingly, since no flammable solvent is used in the battery, there is no possibility of ignition or explosion due to the decomposition reaction of the conventional electrolyte, which greatly improves safety. All-solid-state batteries also have the advantage of being able to use Li metal or Li alloys as negative electrode materials, which can dramatically improve the energy density relative to the mass and volume of the battery.

The most commonly used all-solid-state batteries are sulfide-based all-solid-state batteries. During fabrication, these sulfide-based all-solid-state batteries typically employ a warm isostatic pressing (WIP) process (i.e., the electrodes are wrapped in a pouch, sealed, and pressurized) to achieve an electrode-solid electrolyte interfacial bond. If the electrode-solid electrolyte interface is not well formed because the electrode-solid electrolyte interface is not properly bonded, it is difficult for lithium (Li) ions to migrate and the battery cannot be operated.

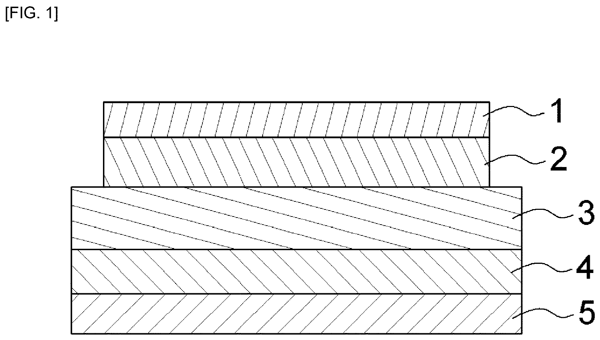

For this WIP process, the electrolyte layer cracked after WIP, even with small impacts, as shown in FIG. 1.

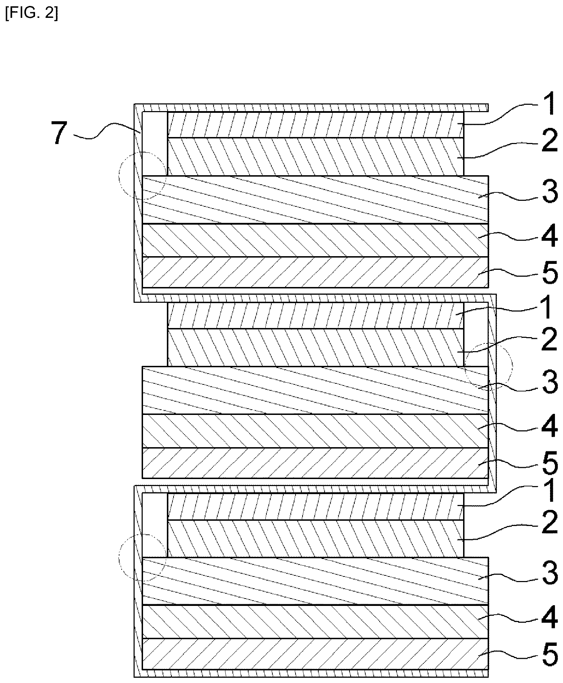

In particular, in the case of stacking by Z-stacking method utilizing a separator, as shown in FIG. 2, there is a problem of cracking of the electrolyte layer due to the tension of the separator, so it is necessary to explore a novel all-solid-state battery with a structure that does not cause cracking of the electrolyte layer while isostatically pressurizing the cell.

(Patent Reference 1) Korean Patent Laid-open Publication No. 10-2016-0131681

### [Detailed Description of the Invention]

### [Technical Problem]

To solve the above problems, the inventors of the present invention propose the following. The purpose of the present invention is to provide an all-solid-state battery having a structure capable of preventing the occurrence of cracks in the electrolyte layer having a large electrode dash size, wherein the cracks typically occur due to the stiffening of the electrode/electrolyte layer caused by the WIP process used during the production of sulfide-based all-solid-state battery, when applying Z-stacking for unit cell stacking, which can induce cracks in the electrolyte layer due to the separator.

### [Technical Solution]

To accomplish the above objectives, in accordance with one example of the present invention, the present invention provides an all-solid-state battery comprising an electrode assembly comprising an electrode laminate comprising a positive electrode, an electrolyte film, and a negative electrode; and a pair of protective layers positioned on the upper and lower periphery of the electrode laminate; and a separator wrapped around the electrode assembly in a zigzag manner, such that the electrode assembly is positioned in a folded portion.

In addition, the protective layer comprises a material selected from the group consisting of PI, PP, and PET.

Further, the protective layer and the exterior of the electrode laminate are bonded through a primary coating layer or a binder layer.

Further, the binder layer comprises a material selected from the group consisting of PVDF, PO, and PUR.

Furthermore, the protective layer has a length longer than the positive electrode and the negative electrode.

A positive electrode current collector is located on a positive electrode and a separator of the electrode assembly, and a negative electrode current collector is located on a negative electrode and a separator of the electrode assembly.

Further, the separator holds the electrode assembly.

### [Advantageous Effects]

The all-solid-state battery according to one example of the present invention further disposes a protective layer on the outside of the electrode laminate (a positive electrode, an electrolyte film, a negative electrode), which has the effect of preventing cracking of the electrolyte layer due to tension of the separator.

### [Brief Description of Drawing]

FIG. 1 is a diagram illustrating the structure of an all-solid-state battery according to the prior art.
FIG. 2 is a diagram illustrating a laminated structure of an all-solid-state battery according to the prior art.
FIG. 3 is a diagram illustrating the cell structure of an all-solid-state battery according to one example of the present invention.
FIG. 4 is a diagram illustrating a laminated structure of an all-solid-state battery according to one example of the present invention.
FIG. 5 is a diagram illustrating a stacked structure of an all-solid-state battery according to another example of the present invention.
FIG. 6 is a diagram illustrating a stacked structure of an all-solid-state battery according to another example of the present invention.
FIG. 7 is a diagram illustrating a stacked structure of an all-solid-state battery according to another example of the present invention.
FIG. 8 is a diagram illustrating a stacked structure of an all-solid-state battery according to another example of the present invention.

### [Best Mode]

The following describes the disclosure in more detail to facilitate understanding of the invention.

The terms and words used in this specification and claims are not to be construed in their ordinary or dictionary sense, but rather in a sense and concept consistent with the technical idea of the present invention, based on the principle that the inventor may define the concept of a term as he/her sees fit to best describe his/her invention.

As used herein, the term "electrode laminate" means a structure of an all-solid-state battery in which the positive electrode, electrolyte film, and negative electrode are simply laminated.

As used herein, the term "electrode assembly" refers to a structure of an all-solid-state battery that includes additional configurations other than the electrode laminate. For example, as used herein, it refers to a structure of an all-solid-state battery comprising a protective layer in addition to the electrode laminate.

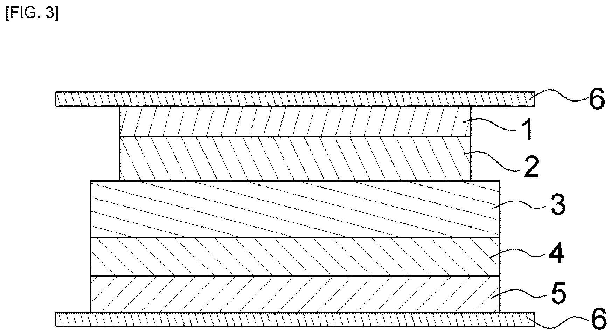

FIG. 3 is a diagram illustrating a unit cell of an all-solid-state battery according to one example of the present invention.

Referring to FIG. 3, an all-solid-state battery according to one example of the present invention includes an electrode assembly comprising an electrode laminate comprising a positive electrode, an electrolyte film, and a negative electrode; and a pair of protective layers positioned on the upper and lower periphery of the electrode laminate; and a separator wrapped around the electrode assembly in a zigzag manner, such that the electrode assembly is positioned in a folded portion.

An electrode assembly of an all-solid-state battery according to one example of the present invention includes an electrode laminate comprising a positive electrode (2), an electrolyte film (3), and a negative electrode (4).

An electrode laminate according to one example of the present invention may include a positive electrode (2).

The positive electrode according to one example of the present invention can be any positive electrode, without limitation, as long as it is used in an all-solid-state battery, and can include, for example, a positive electrode active material, a solid electrolyte, a conductive material, and a binder. Any positive electrode active material that can be used as a positive electrode active material in an all-solid-state battery can be used without limitation. The positive electrode active material may be a lithium transition metal oxide comprising one or more transition metals. For example, the positive electrode active material may be selected from the group consisting of LiCoO₂, LiNiO₂, LiMnO₂, Li₂MnO₃, LiMn₂O₄, Li(NiₐCo_{b}Mn_{c})O₂ (wherein 0<a<1, 0<b<1, 0<c<1, and a+b+c=1), LiNi_{1-y}Co_{y}O₂ (wherein 0<y<1), LiCo_{1-y}Mn_{y}O₂, LiNi_{1-y}Mn_{y}O₂ (wherein 0<y<1), Li(NiₐCo_{b}Mn_{c})O₄ (0<a<2, 0<b<2, 0<c<2, and a+b+c=2), LiMn_{2-z}Ni_{z}O₄ (wherein 0<z<2), LiMn_{2-z}Co_{z}O₄ (wherein 0<z<2), and combinations thereof.

In addition, the binder is mixed with the positive electrode active material and the conductive material, which are powdered particulates, to bind the components together and aid in the growth of the particles. For example, sulfide-based solid electrolytes have moisture-sensitive properties, such as the generation of H2S gas upon contact with water, so it is desirable to exclude as much moisture as possible from the granule formation process. The binder may be an organic binder, wherein the organic binder refers to a binder that is soluble or dispersible in an organic solvent, in particular N-methylpyrrolidone (NMP), as distinguished from an aqueous binder, wherein water is used as a solvent or a dispersing medium. For example, the binder may be selected from the group consisting of, but not limited to, polyvinylidene fluoride (PVDF), vinylidene fluoride-hexafluoropropylene copolymer (PVDF-co-HFP), polyvinyl alcohol, starch, hydroxypropyl cellulose, regenerated cellulose, polyvinylpyrrolidone, polyimide, polyamideimide, polyethylene, polypropylene, ethylene-propylene-diene monomer (EPDM), sulfonated EPDM, styrene-butylene rubber, and fluororubber.

An electrode laminate according to one example of the present invention may include an electrolyte film (3). The electrolyte film may comprise a solid electrolyte, wherein the solid electrolyte may comprise at least one selected from a sulfide-based solid electrolyte, a polymer-based solid electrolyte, and an oxide-based solid electrolyte, and may preferably comprise only a sulfide-based solid electrolyte. The sulfide-based solid electrolyte may comprise a lithium salt, wherein the lithium salt is an ionizable lithium salt, expressed as Li⁺X⁻. These lithium salts are not specifically limited, but may include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

Furthermore, the sulfide-based solid electrolyte may comprise a Li-P-S-based glass or a Li-P-S-based glass-ceramic, which contains sulfur (S) and has an ionic conductivity of a metal belonging to Group 1 or 2 of the periodic table. Non-limiting examples of these sulfide-based solid electrolytes include Li₂S-P₂S₅, Li₂S-LiI-P₂S₅, Li₂S-LiI-Li₂O-P₂S₅, Li₂S-LiBr-P₂S₅, Li₂S-LiCl-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅-Al₂S₃, Li₂S-GeS₂ and Li₂S-GeS₂-ZnS, and the sulfide-based solid electrolyte may comprise one or more thereof.

These solid electrolytes can act as a separator in a typical lithium secondary battery (i.e., electrically insulate the negative electrode and positive electrode while allowing lithium ions to pass through). On the other hand, the all-solid-state battery can be utilized as a semi-solid-state battery by including a liquid electrolyte as needed, in which case a separate polymer separator may be required.

An electrode laminate according to one example of the present invention may include a negative electrode (4). The negative electrode may include any negative electrode active material available in conventional all-solid-state batteries. For example, the negative electrode active material may include at least one selected from the group consisting of carbon, such as anthracite carbon, graphitized carbon, and the like; metal complex oxide, such as LiₓFe₂O₃ (wherein 0≤x≤1), LiₓWO₂ (wherein 0≤x≤1), SnₓMe₁₋ₓMe'_{y}O_{z} (wherein Me is Mn, Fe, Pb, or Ge; Me' is Al, B, P, or Si; elements of Group 1, 2 or 3 of the periodic table; halogen; 0<x≤1; 1≤y≤3; and 1≤z≤8) and other metal complex oxides; lithium metals; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, etc.; conductive polymers such as polyacetylene; Li-Co-Ni based materials; titanium oxides; and lithium titanium oxides.

The electrode assembly of an all-solid-state battery according to one example of the present invention includes a protective film (6).

The electrode/electrolyte layer can be hardened by the WIP process used to fabricate sulfide-based all-solid-state batteries. When these hardened unit cells are stacked in a Z-stacking method, the unit cells are able to allow the tension of the enclosing separator to act directly on the electrode/electrolyte layer. In this case, the tension of the separator is concentrated on the electrolyte layer, which is larger than the electrode, and the separator may cause the electrolyte layer to crack. In this case, the protective film is disposed on the outside of the electrode laminate, so that even if the separator wraps around the electrode assembly and exerts strong pressure, it cannot directly pressure the electrolyte film within the electrode assembly. Accordingly, the electrode assembly of an all-solid-state battery according to one example of the present invention may comprise a protective film, thereby preventing cracking of such electrolyte film.

For the above functions, the protective layer of the all-solid-state battery according to one example of the present invention may include, without limitation, any material that is not deformed at a temperature of 80°C, and may include, for example, any one material selected from the group consisting of PI, PP, and PET.

In an all-solid-state battery according to one example of the present invention, the exterior of the protective layer and the electrode laminate may be bonded via a primary coating layer or a binder layer.

In an all-solid-state battery according to one example of the present invention, the primary coating layer may be any primary coating layer conventionally used in the art.

In an all-solid-state battery according to one example of the present invention, the binder layer can be used as a material without any particular limitation as long as it is adhesive, and can include, for example, any one material selected from the group consisting of PVDF, PO, and PUR.

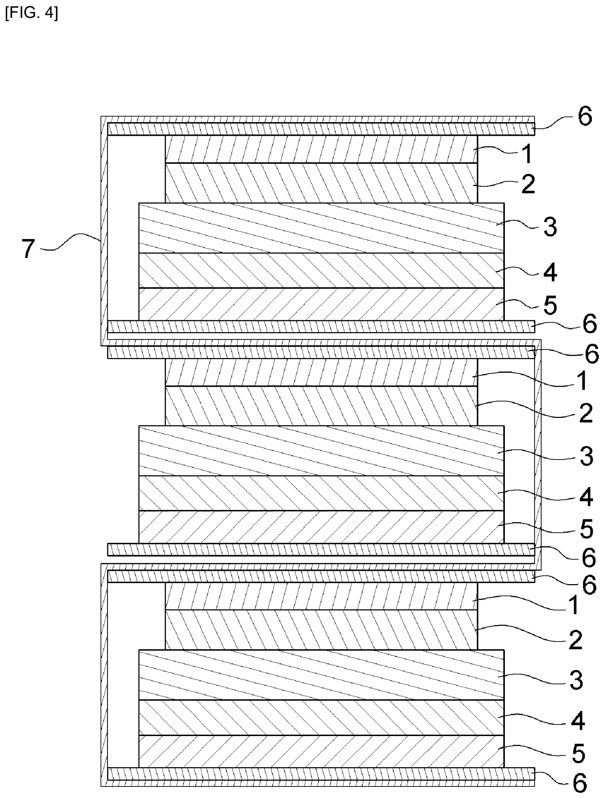

In an all-solid-state battery according to one example of the present invention, the length of the protective layer may be longer than the positive electrode and negative electrode. Specifically, as shown in FIG. 4, the length of the protective layer is longer than the positive electrode and negative electrode, which prevents the separator from exerting direct pressure on the electrode or electrolyte film. This prevents the electrolyte film from cracking.

In an all-solid-state battery according to one example of the present invention, the pair of protective layers may have the same length. Specifically, as shown in FIG. 4, when a pair of protective layers are equal in length, they are longer than the positive electrode and negative electrode, preventing the separator from exerting direct pressure on the electrode or electrolyte film. This prevents the electrolyte film from cracking.

An all-solid-state battery according to one example of the present invention includes a separator (7).

In an all-solid-state battery according to one example of the present invention, the separator may immobilize the electrode assembly. The separator is not particularly limited as long as it is a typical separator used in a secondary battery, but preferably it may be a separator using one or more materials selected from the group consisting of polyethylene (PE), polypropylene (PP), and resins made of a blend of PE and PP.

In an all-solid-state battery according to one example of the present invention, a positive electrode current collector (1) may be located on the positive electrode and the separator of the electrode assembly, and a negative electrode current collector (5) may be located on the negative electrode and the separator of the electrode assembly.

### [Mode for Practicing the Invention]

In an all-solid-state battery according to one example of the present invention, an electrode laminate comprising a positive electrode (2), an electrolyte film (3), and a negative electrode (4) may have a variety of structures.

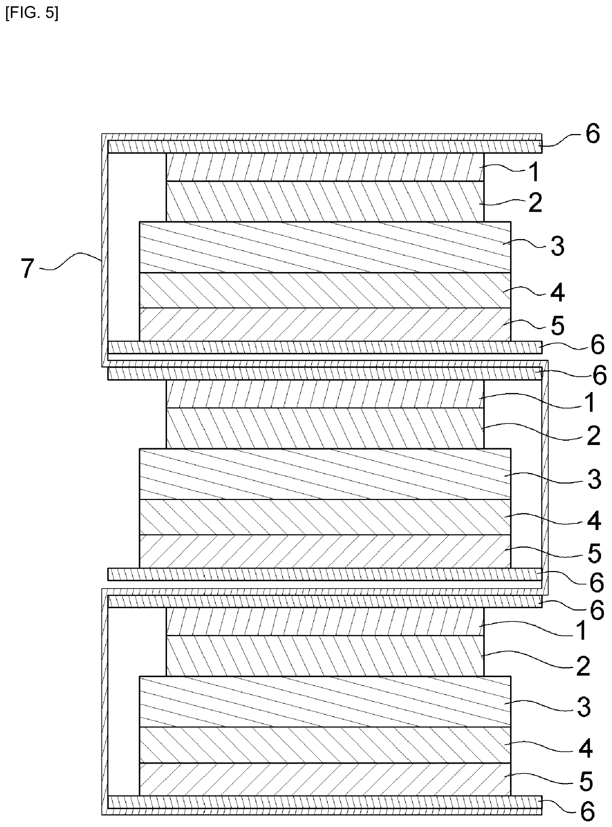

In an all-solid-state battery according to one example of the present invention, the electrode laminate may have the structure of a cross-sectional electrode as shown in FIG. 5. In an all-solid-state battery according to one example of the present invention, a single-sided electrode may mean an electrode in which the electrode layer is formed on only one side of the current collector (foil).

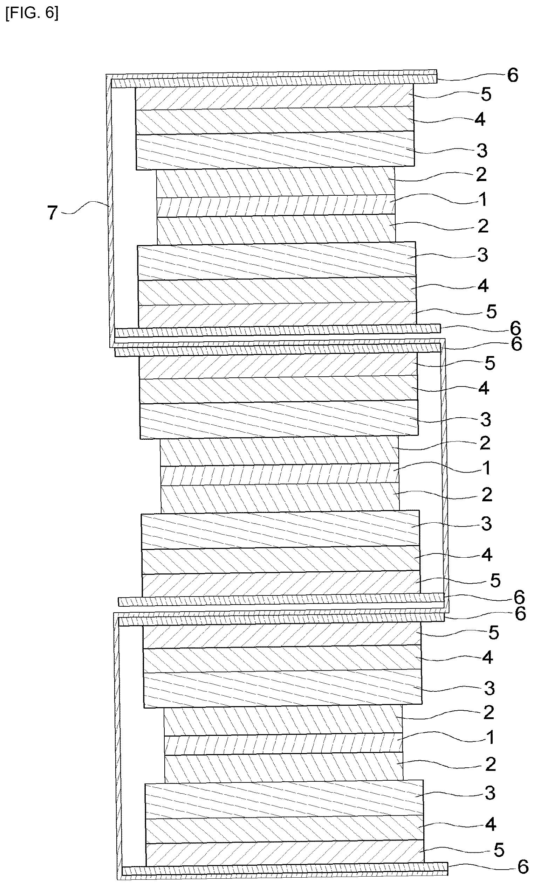

In an all-solid-state battery according to one example of the present invention, the electrode laminate may have a C-type structure as shown in FIG. 6. In an all-solid-state battery according to one example of the present invention, a C-type structure may mean a structure in which an electrode having a positive electrode layer formed on both sides of a current collector (foil) is positioned in the center, and on both sides of the electrode, electrolyte layers and electrodes having a negative electrode layer on one side of the current collector (foil) are positioned.

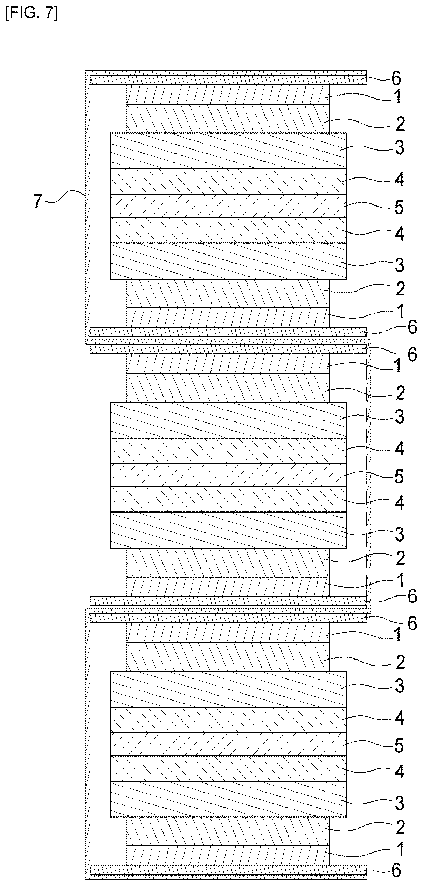

In an all-solid-state battery according to one example of the present invention, the electrode laminate may have an A-type structure as shown in FIG. 7. In an all-solid-state battery according to one example of the present invention, an A-type structure may mean a structure in which an electrode having a negative electrode layer formed on both sides of a current collector (foil) is positioned in the center, and on both sides of the electrode, electrolyte layers and electrodes having a positive electrode layer on one side of the current collector (foil) are positioned.

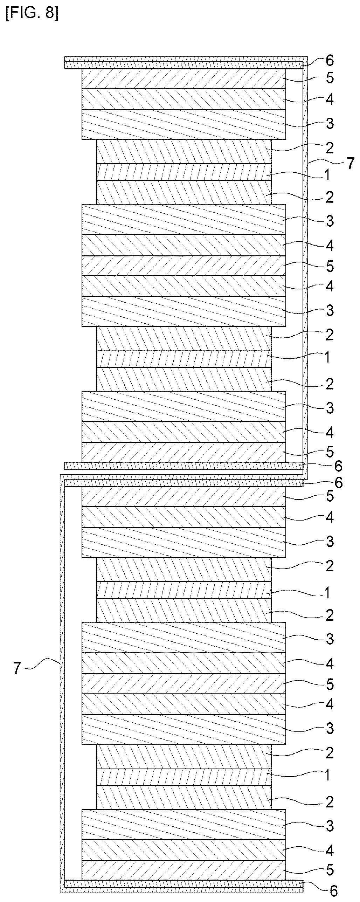

In an all-solid-state battery according to one example of the present invention, the electrode laminate may have a multi-unit cell as shown in FIG. 8. In an all-solid-state battery according to one example of the present invention, a multi-unit cell is one that utilizes more double-sided electrodes than a typical unit cell to improve energy density. For example, as shown in FIG. 8, it may mean a structure in which an electrode having a negative electrode layer formed on both sides of a current collector (foil) is positioned in the center, and on both sides of the electrode, electrolyte layers and electrodes having positive electrode layers on both sides of the current collector (foil) are located, and then, at the outermost angle, an electrode having a negative electrode layer formed on one side of the current collector (foil) is located.

The present invention also provides a battery module comprising the all-solid-state battery as a unit cell, a battery pack comprising the battery module, and a device comprising the battery pack as a power source. Specific examples of such devices include, but are not limited to, a power tool powered by an electric motor; an electric vehicle, including an electric vehicle (EV), a hybrid electric vehicle (HEV), a plug-in hybrid electric vehicle (PHEV), and the like; an electric two-wheeled vehicle, including an electric bicycle (E-bike) and an electric scooter (E-scooter); an electric golf cart; a power storage system; and the like.

Although the present invention has been described above by way of limited examples and drawings, the invention is not limited thereby, and various modifications and variations may be made by those having ordinary skill in the art, within the technical idea of the invention and the equivalent scope of the patent claims set forth below.

### [Reference Numerals]

1: Positive electrode current collector
2: Positive electrode
3: Electrolyte film
4: Negative electrode
5: Negative electrode current collector
6: Protective layer
7: Separator

## Claims

1. An all-solid-state battery comprising:
an electrode assembly comprising an electrode laminate comprising a positive electrode, an electrolyte film, and a negative electrode; and a pair of protective layers positioned on the upper and lower periphery of the electrode laminate; and
a separator wrapped around the electrode assembly in a zigzag manner, such that the electrode assembly is positioned in a folded portion.

2. The all-solid-state battery according to claim 1,
wherein the protective layer comprises any one material selected from the group consisting of PI, PP and PET.

3. The all-solid-state battery according to claim 1,
wherein the protective layer and the exterior of the electrode laminate are bonded through a primary coating layer or a binder layer.

4. The all-solid-state battery according to claim 1,
wherein the binder layer comprises any one material selected from the group consisting of PVDF, PO and PUR.

5. The all-solid-state battery according to claim 1,
wherein the protective layer has a length longer than the positive electrode and the negative electrode.

6. The all-solid-state battery according to claim 1,
wherein a positive electrode current collector is located on a positive electrode and a separator of the electrode assembly,
wherein a negative electrode current collector is located on a negative electrode and a separator of the electrode assembly.

7. The all-solid-state battery according to claim 1,
wherein the separator holds the electrode assembly.
